# EUROPÄISCHE PATENTANMELDUNG

(11) **EP 0 554 702 A1**
(43) Veröffentlichungstag der Anmeldung: **11.08.1993**
(21) Anmeldenummer: 93100688.6
(22) Anmeldetag: 19.01.1993
(51) Int. Cl.: H02G 3/04

(54) **Kabelkanal, insbesondere Verdrahtungskanal**

(30) Priorität: 04.02.1992 DE 4203066
(71) Anmelder: Hermann Kleinhuis GmbH. & Co. KG, D-58507 Lüdenscheid (DE)
(72) Erfinder: Balzer,Manfred, W-5880 Lüdenscheid (DE); Böing,Manfred, W-5880 Lüdenscheid (DE); Picken,Andreas, W-5800 Hagen 1 (DE)
(74) Vertreter: Buse, Karl Georg, Dipl.-Phys.

(57) **Zusammenfassung**

Es handelt sich um einen Kabelkanal, insbesondere einen Verdrahtungskanal, dessen Gehäuse aus einem Unterteil und einem damit lösbar verbindbaren Deckel besteht. Im Unterteil sind Halteelemente angeordnet, die zum Anbringen von elektrischen Installationsteilen, wie Kabelbindern, Kabelbinderhaltern od.dgl. bzw. von Trennwänden, Unterteilungen od.dgl. dienen. Erfindungsgemäß ist vorgesehen, daß die Halteelemente einem Einsatz zugeordnet sind, der seinerseits lösbar mit den Wänden des Unterteils des Kabelkanals verbunden werden kann. In Längsrichtung des Kabelkanals wird eine Mehrzahl von Einsätzen hintereinander angeordnet; dabei ist der gegenseitige Abstand von benachbarten Einsätzen vom Benutzer frei wählbar. Bevorzugt wird ein Einclipsen des Einsatzes an einer frei wählbaren Stelle im Unterteil des Kabelkanals durchgeführt. Der Einsatz selbst hat einen plattenförmigen Grundkörper, der auf seiner Oberseite eine Mehrzahl von an sich bekannten Halteelementen und an seiner Unterseite Führungskanäle für Kabelbinder aufweist; diese stehen über Durchbrüche mit der Oberseite des Grundkörpers in Verbindung.

## Beschreibung

Die Erfindung bezieht sich auf einen Kabelkanal, insbesondere Verdrahtungskanal, dessen Gehäuse aus einem Unterteil und einem damit lösbar verbindbaren Deckel besteht, wobei im Unterteil Halteelemente angeordnet sind, die zum Anbringen von elektrischen Installationsteilen, wie Kabelbindern, Kabelbinderhaltern od.dgl. bzw. von Trennwänden, Unterteilungen od.dgl. dienen.

Derartige Kabelkanäle sind in mannigfachen Ausführungsformen bekannt. Die dabei eingesetzten Halteelemente sind in aller Regel auf der Innenseite des Bodens des Unterteiles angebracht und als durchlaufende leistenförmige Körper ausgebildet. Diese leistenförmigen Halteelemente haben vielfach im Querschnitt gesehen eine pilzförmige Gestaltung. Was die Anbringung von Trennwänden, Unterteilungen od.dgl. angeht, so haben sich diese bekannten Kabelkanäle bewährt, weil man die Trennwände mühelos auf die als Leisten ausgebildeten Halteelemente aufstecken kann. Schwierigkeiten gibt es jedoch bei den bekannten Ausführungsformen von Kabelkanälen dann, wenn z.B. Kabelbinder im Innenraum des Unterteils des Gehäuses des Kabelkanals untergebracht werden sollen. Diese Kabelbinder haben an sich den Vorteil, daß sie eine Ordnungsfunktion haben, weil mit ihnen eine Bündelung der zahlreichen im Kabelkanal angeordneten Kabel, Leitungen od.dgl. möglich ist. Darüber hinaus dienen sie zur Zugentlastung. Bisher konnte man diese Kabelbinder nicht unmittelbar mit den Seitenwandungen des Unterteils verbinden, vielmehr hat man Kabelbinderhalter aus Polyamid od.dgl. benutzt, die mit Befestigungsmitteln,zum Beispiel mit Schrauben, in dem Gehäuse gehalten wurden. Die Kabelbinderhalter nahmen dann ihrerseits den Kabelbinder auf. Dies geschieht dadurch, daß der streifenförmige Hauptteil des Kabelbinders durch Öffnungen des Kabelbinderhalters hindurchgesteckt wurde.

Hier setzt die Erfindung ein. Sie will die Kabelkanäle der eingangs näher gekennzeichneten Art weiterverbessern, insbesondere derart, daß eine einfache und zweckmäßige Unterbringung von Kabelbindern od.dgl. im Innenraum des Unterteils des Gehäuses möglich ist. Dabei soll aber nach wie vor dem Benutzer die Möglichkeit gegeben werden, in dem Kabelkanal andere Teile, seien es Trennwände, Unterteilungen oder Installationsgeräte, unterzubringen.

Der Erfindung liegt die Aufgabe zugrunde, Kabelkanäle der eingangs näher gekennzeichneten Art so zu gestalten, daß eine einfachere Unterbringung und Anordnung von Kabelbindern od.dgl. im Innenraum des Unterteils des Kabelkanals möglich ist. Zur Lösung dieser Aufgabe wird erfindungsgemäß vorgeschlagen, daß die Halteelemente einem Einsatz zugeordnet sind, der seinerseits lösbar mit den Wänden, vorzugsweise den Seitenwänden des Unterteils des Kabelkanals verbindbar ist, und daß in Längsrichtung des Kabelkanals eine Mehrzahl von Einsätzen hintereinander angeordnet sind, wobei der gegenseitige Abstand benachbarter Einsätze frei wählbar ist.

Der erfindungsgemäße Kabelkanal hat im Vergleich mit den bekannten Ausführungformen erhebliche Vorteile. Zunächst kann die Innenseite des Bodens des Unterteils völlig glatt gehalten werden, auf die Anbringung der in Längsrichtung des Kabelkanals verlaufenden, den Boden angeformten Halteleisten wird somit verzichtet. Stattdessen werden die Halteelemente einem Einsatz zugeordnet, der seinerseits lösbar mit diametral gegenüberliegenden Wandungen des Unterteils verbunden werden kann. Ein und demselben Kabelkanal können dabei mehrere solcher Einsätze mit Halteelementen zugeordnet werden. Dem Benutzer steht es dabei frei, die Anzahl der pro Längeneinheit des Kabelkanals anzubringenden Einsätze mit Halteelemente selbst zu bestimmen und auch den gegenseitigen Abstand der Einsätze mit den Halteelementen voneinander festzulegen, er ist dabei auf die Einhaltung bestimmter Maße und Abmessungen nicht angewiesen.

Bei der bevorzugten Ausführungsform der Erfindung weist der Einsatz Gegenleisten auf, die mit Leisten der Innenseiten der Seitenwände des Unterteils des Kabelkanals zusammenwirken, derart, daß ein Einclipsen des Einsatzes an einer frei wählbaren Stelle im Unterteil des Kabelkanals durchführbar ist. Die Befestigung des erfindungsgemäßen Einsatzes ist daher außerordendlich einfach. Es genügt ein einfaches Einclipsen des Einsatzes, wobei der weitere Vorteil darin besteht, daß bei Bedarf ein Wiederherausnehmen des Einsatzes aus dem Unterteil des Kabelkanals möglich ist.

Sollte aus irgendeinem Grund Wert darauf gelegt werden, die Einsätze an ganz bestimmten Stellen der Seitenwände anzubringen, so ist es möglich, die Gegenleisten des Einsatzes und die Leisten der Seitenwände mit zusätzlichen Rasten und Gegenrasten zu versehen. Auf diese Weise wird eine ungewollte Verschiebung des Einsatzes in Kabellängsrichtung vermieden. Bei Fehlen solcher Rasten und Gegenrasten ist dabei - was in manchen Fällen zweckmäßig sein kann - eine Längsverschiebung des eingeclipsten Einsatzes möglich.

Bei der bevorzugten Ausführungsform der Erfindung weist der Einsatz einen plattenförmigen Grundkörper auf, der auf seiner dem Deckel des Kabelkanals zugekehrten Oberseite eine Mehrzahl von Halteelementen und an seiner Unterseite Führungskanäle für Kabelbinder aufweist, die über Durchbrüche mit der Unterseite des Grundkörpers in Verbindung stehen. Dabei sind an dem plattenförmigen Grundkörper an diametral gegenüberliegenden Endteilen Gegenleisten angeordnet. Durch diese Gestalt des Einsatzes kann auf die bisher üblichen Kabelbinderhalter ganz verzichtet werden, wobei von besonderem Vorteil ist, daß die Einsätze nicht wie die bekannten Kabelbinderhalter mittels Schrauben an den Wänden oder anderen Teilen des Gehäuses des Kabelkanals angebracht werden müssen; vielmehr geschieht die Herstellung der Verbindung durch einfaches einclipsen. Die Kabelbinder selbst können dann vom Benutzer in einfachster Weise mit einem Einsatz verbunden werden. Dies geschieht dadurch, daß das eine Ende des Kabelbinders in einen der vorhandenen Durchbrüche des Einsatzes hindurchgeführt wird. Dabei gelangt dieses eingeführte Ende in dem Bereich der Führungskanäle, die an der Unterseite des Einsatzes angeordnet sind. Das Ende des Kabelbinders wird an den Seitenwänden geführt und tritt durch einen der weiteren Durchbrüche des plattenförmigen Grundkörpers heraus, so daß dann unter Erfassung von gebündelten Leitungen, Rohren od.dgl. das herausgeführte eine Ende des Kabelbinders in bekannter Weise mit dem anderen Ende desselben verbunden werden kann. Dabei ist es von besonderem Vorteil, daß in dem Grundkörper eine Vielzahl von Durchbrüchen vorhanden ist, so daß die Kabelbinder auch in unterschiedlicher Weise mit dem Grundkörper verbunden werden können. Die Führungskanäle an der Unterseite des plattenförmigen Grundkörper des Einsatzes könnend dabei unterschiedlich lang bemessen sein.

Es empfiehlt sich, daß der plattenförmige Grundkörper des Einsatzes eine Vielzahl von parallel und im Abstand voneinander verlaufenden Längsstegen aufweist, die durch mehrere Querstege bzw. Endteile miteinander verbunden sind, und daß Bereiche der Oberseite der Stege der Anbringung der Halteelemente dienen, während Zwischenräume der Stege Durchbrüche bilden, die in Führungskanäle auf der Unterseite des Grundkörpers einmünden. Ein solcher plattenförmiger Grundkörper kann als einstückiger Kunststoffkörper gefertigt werden.

Es empfiehlt sich, wenigstens eine der Begrenzungswandungen der Durchbrüche des Grundkörpers zur Erleichterung des Einführens eines Kabelbinders od.dgl. eine Schräge aufweisen zu lassen. Durch diese Schräge wird eine gezielte Einführung des einen Endes des Kabelbinders in den Führungskanal an der Unterseite des plattenförmigen Grundkörpers des Einsatzes bewirkt.

Nach einem anderen Vorschlag der Erfindung gehen die Schrägen derjenigen Durchbrüche des Grundkörpers des Einsatzes, die den Endteilen benachbart sind, in Rampen über, an die sich eine Auslaufspitze anschließt. Die Rampen haben ebenfalls einen solchen Neigungswinkel, der das Einführen bzw. Herausführen der Enden der Kabelbinder aus dem plattenförmigen Grundkörper des Einsatzes erleichtern.

Zweckmäßig ist es, wenn jedes Halteelement in an sich bekannter Weise einen Kopf aufweist, dessen Unterseite eine Schulter zum Anbringen einer Trennwand eines Innenkanals od.dgl. hat, die in einen Verbindungssteg übergeht, der seinerseits dem Grundkörper des Einsatzes angeformt ist.

Dabei empfiehlt es sich, den Querstegen des Grundkörpers ein und desselben Einsatzes mehrere Halteelemente zuzuordnen.

Beispielsweise können diese Halteelemente in Querrichtung des Einsatzes hintereinanderliegend angeordnet sein. Die Stege der Halteelemente können darüber hinaus durch Querverbinder miteinander verbunden werden.

Auf den Fig. der Zeichnungen ist die Erfindung in mehreren Ausführungsbeispielen dargestellt, und zwar zeigen:
- Fig. 1: einen Querschnitt durch einen Kabelkanal, in dessen Unterteil ein Einsatz lösbar angebracht ist, wobei der zugehörige Deckel noch nicht mit dem Unterteil des Gehäuses des Kabelkanals verbunden ist;
- Fig. 2: eine Draufsicht auf den Unterteil eines Kabelkanal, in dem mehrere erfindungsgemäße Einsätze lösbar untergebracht sind, teilweise weggebrochen und bei fehlendem Deckel;
- Fig. 3: in vergrößertem Maßstab einen Schnitt durch einen Kabelkanal mit einem in Unterteil angeordneten Einsatz, an dem mehrere Kabelbinder angeordnet sind, wobei der Deckel noch nicht mit dem Unterteil des Kabelkanals verbunden ist;
- Fig. 4: ebenfalls im Schnitt einen Kabelkanal ähnlich dem der Fig. 3, jedoch bei entfernten Kabelbindern und bei angebrachten Trennwänden, die mit den Halteelementen des Einsatzes lösbar verbunden sind;
- Fig. 5: einen weiteren Querschnitt durch einen Kabelkanal mit eingeclipstem Einsatz, wobei dem Einsatz nunmehr ein Innenkanal zugeordnet ist, der lösbar mit den Halteelementen des Einsatzes verbunden ist;
- Fig. 6: in vergrößertem Maßstab eine Draufsicht auf den Einsatz,der zum Einclipsen in den Unterteil des Kabelkanals nach der Fig. 1 bestimmt ist;
- Fig. 7: einen Schnitt durch den Einsatz entlang der Linie VII - VII der Fig. 6;
- Fig. 8: einen weiteren Schnitt durch den Einsatz nach der Fig. 6 der Zeichnung, diesmal entlang der Linie VIII - VIII, und
- Fig. 9: eine Unteransicht des Einsatzes gemäß der Fig. 6 der Zeichnung.

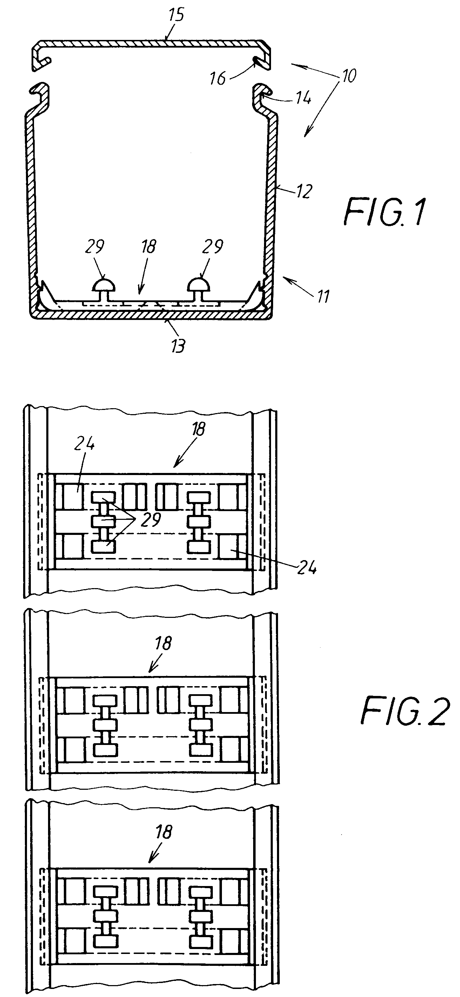

Es sei zunächst erwähnt, daß der in den Fig. 1, 3, 4 und 5 dargestellte Kabelkanal eine an sich bekannte Ausbildung hat. Er steht stellvertretend für andere Kabelkanäle, bei denen die Erfindung benutzt werden kann. Der dargestellte Kabelkanal unterscheidet sich von dem Bekannten in erster Linie nur dadurch, daß sein Boden von durchlaufenden Halteleisten freigehalten ist. Der Kabelkanal hat somit einen glatten, durchlaufenden Innenboden. Ferner ist auf die Darstellung der in dem Innenraum des Kabelkanals unterzubringenden Leitungen, Kabel, Rohre od.dgl. ebenso verzichtet, wie auf die Anordnung von elektrischen Installationsgeräten oder deren Teile. Im übrigen können alle in den Zeichnungen fehlenden Teile des Kabelkanals eine bekannte Ausbildung haben.

Der dem Ausführungsbeispiel zugrunde gelegte Kabelkanal ist generell mit 10 bezeichnet. Der Kabelkanal hat einen im Querschnitt gesehen etwa U-förmigen Unterteil 11, dessen aufrechte Seitenwandungen mit 12 bezeichnet sind, diese sind durch den waagerecht verlaufenden Boden 13 miteinander verbunden. Die oberen freien Enden der Seitenwände 12 haben bekannte Rasten 14, die mit Gegenrasten 16 des Deckels 15 zusammenwirken. Die Verbindung des Deckels 15 geschieht durch einfaches Aufclipsen auf den Unterteil 11. Im übrigen ist die Ausbildung sowohl der Rasten 14 als auch der Gegenrasten 16 bekannt. An Stelle der dargestellten Ausbildungen und Gestaltungen können auch andere Formen von Verrastungen eingesetzt werden. An den Innenseiten der Seitenwände 12 sind in Nachbarschaft des Bodens 13 liegend durchlaufende Leisten 17 angeordnet, die mit Gegenleisten 28 eines generell mit 18 bezeichneten Einsatzes zusammenwirken. Die Herstellung der Verbindung des Einsatzes 18 mit der Innenseite der Seitenwand 12 geschieht durch einfaches Einclipsen, dabei kommen die Leisten 17 und die Gegenleisten 28 miteinander in Eingriff. Es handelt sich dabei um eine lösbare Verbindung, so daß ein Wiederherausnehmen aus dem Innenraum des Unterteiles 11 des Kabelkanales 10 jederzeit möglich ist.

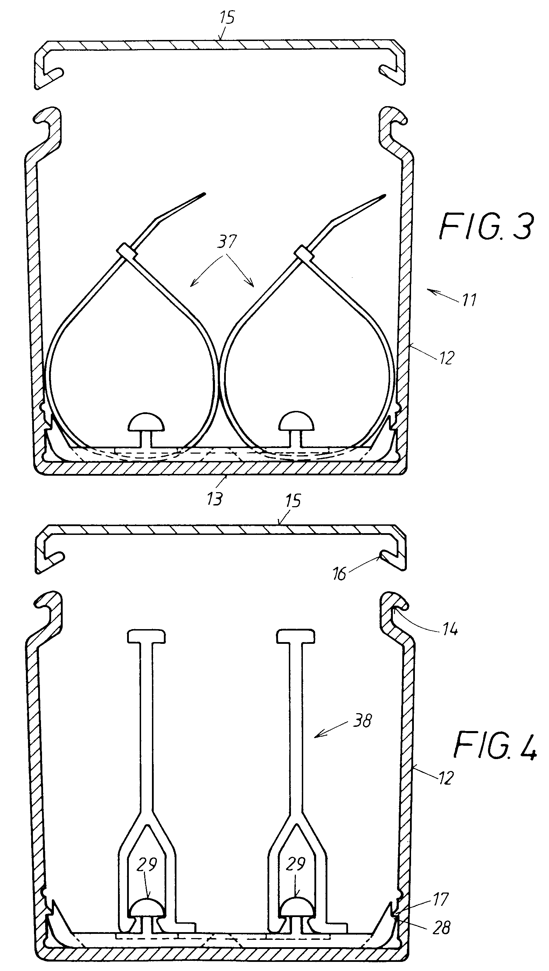

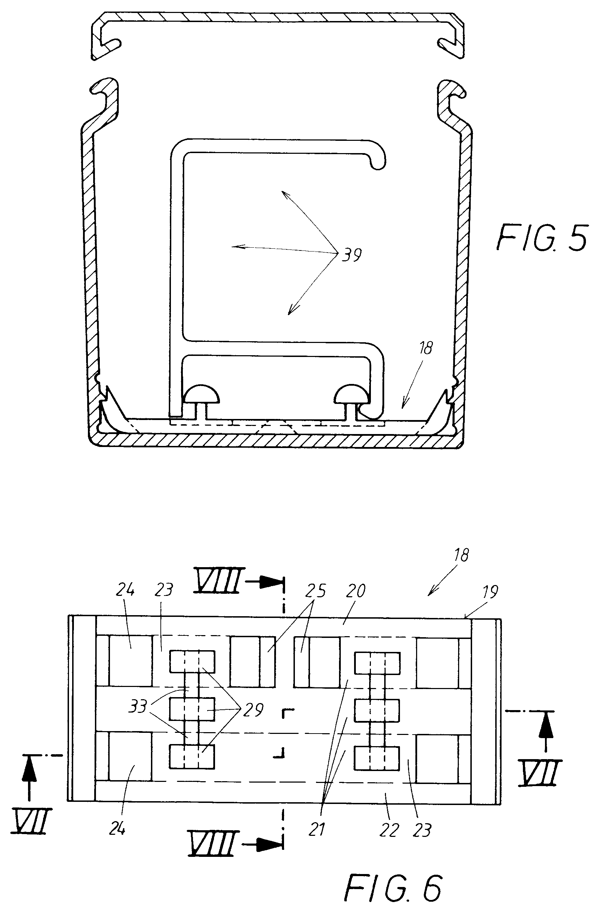

Wie am besten aus den Fig. 6 bis 9 der Zeichnung ersichtlich, weist der Einsatz 18 einen plattenförmigen Grundkörper 19 auf, der auf seiner dem Deckel 15 des Kabelkanals 10 zugekehrten Seite eine Mehrzahl von Halteelementen 29 und an seiner Unterseite Führungskanäle 36 für Kabelbinder 37 aufweist. Die Kabelbinder sind dabei in ihrer wirksamen Lage in der Fig. 3 der Zeichnung wiedergegeben. Die Führungskanäle 36 für die Kabelbinder 37 stehen dabei über Durchbrüche 24 mit der Oberseite des Grundkörpers 19 in Verbindung. An den diametral gegenüberliegenden Endteilen 26 des Grundkörpers 19 des Einsatzes 18 sind die erwähnten Gegenleisten 28 unmittelbar angeformt, die zum Zwecke des Einclipsens mit den Leisten 27 der Seitenwände 12 zusammenwirken.

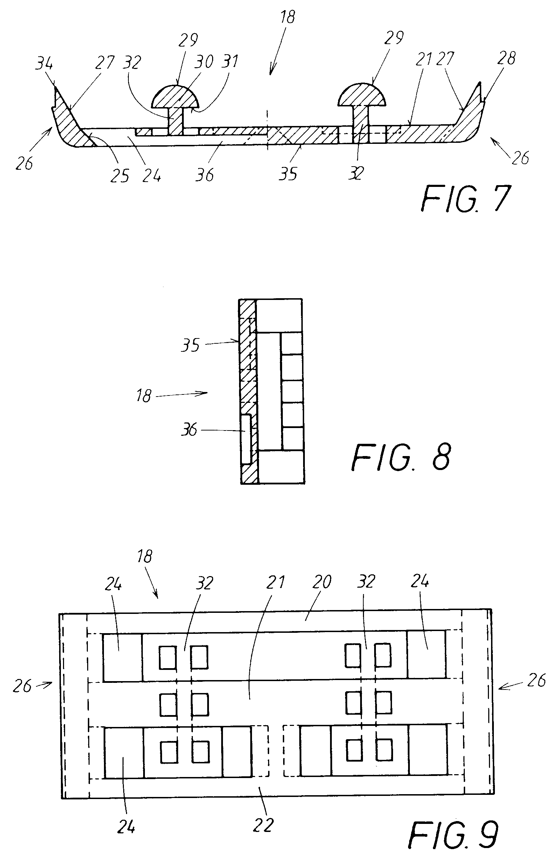

Wie die Fig. 6 und 9 der Zeichnungen am besten erkennen lassen, weist der plattenförmige Grundkörper 19 des Einsatzes 18 eine Vielzahl von parallel und im Abstand voneinander verlaufenden Längsstegen 20, 21, 22 auf, die durch mehrere Querstege 23 bzw. durch die Endteile 26 miteinander verbunden sind. Dabei dienen Bereiche der Oberseite der genannten Stege der Anbringung der Halteelemente 29. Die Zwischenräume zwischen den Stegen bilden dabei die Durchbrüche 24, die in Führungskanäle 36 einmünden, welche auf der Unterseite des Grundkörpers 19 verlaufen. Die Fig. 6 und 7 zeigen, daß wenigstens eine der Begrenzungswandungen der Durchbrüche 24 des Grundkörpers 19 eine Schräge 25 aufweist, diese dient der Erleichterung des Einführens eines der Kabelbinder 37. Zusätzlich läßt die Fig. 7 der Zeichnungen erkennen, daß die Schrägen 25 derjenigen Durchbrüche 24 des Grundkörpers 19 des Einsatzes 18, die den Endteilen 26 benachbart sind, in Rampen 27 übergehen, an die sich jeweils eine Auslaufspitze 34 anschließt. Die Neigungswinkel der Schrägen 25 bzw. der Rampen 27 können, wie in Fig. 7 dargestellt, voneinander abweichen, sie können ggf. aber auch gleichgehalten sein, so daß ein stufenloser Übergang von der Schräge 25 in die Rampe 27 möglich ist.

In dem gewählten Ausführungsbeispiel sind einem einzigen Einsatz 18 insgesamt sechs Halteelemente 29 zugeordnet, diese sind in zwei Gruppen von jeweils drei Halteelementen zusammengefaßt, wie dies die Fig. 6 der Zeichnung am besten erkennen läßt. Aus der Querschnittszeichnung Fig. 7 ergibt sich ferner, daß jedes Halteelement 29 einen Kopf 30 aufweist, dessen Unterseite eine Schulter 31 zum Anbringen einer Trennwand 38 eines Innenkanals 39 od.dgl. hat. An der Unterseite des Kopfes 30 ist in der Mitte liegend jeweils ein Verbindungssteg 32 vorgesehen, der den Grundkörper 19 des Einsatzes 18 angeformt ist. Die Verbindungsstege 32 der drei Halteelemente 29 stehen im dargestellten Ausführungsbeispiel durch Querverbinder 33 miteinander in Verbindung.

In der Fig. 3 der Zeichnung ist wiedergegeben, wie die an sich bekannten Kabelbinder 37 mit dem erfindungsgemäßen Einsatz 18 für den Kabelkanal 10 zusammenwirken. Dabei ist in dem zeichnerisch wiedergegebenen Ausführungsbeispiel vorausgesetzt, daß einem einzigen Einsatz insgesamt zwei Kabelbinder 37 zugeordnet sind. Es ist dabei ersichtlich, daß Bereiche des streifenförmigen Kabelbinders 37 in den Führungskanälen auf der Unterseite des Grundkörpers 19 des satzes 18 liegen. Durch die im Grundkörper vertiefte Anbringung der Führungskanäle 36 ist es möglich, daß die Unterseite des Grundkörpers 19 des Einsatzes 18 voll auf den Boden 13 aufliegt, und zwar auch dann, wenn die Kabelbinder wie in der Fig. 3 der Zeichnung in den Führungskanälen des Einsatzes 18 untergebracht sind. Es ist bei der erfindungsgemäßen Ausbildung des Einsatzes möglich, diesem auch nur einen einzigen Kabelbinder 37 zuzuordnen, in diesem Falle liegen Bereiche des streifenförmigen Teiles des Kabelbinders 37 in dem längenmäßig größten Führungskanal auf der Unterseite des Grundkörpers 19.

In der Fig. 4 der Zeichnung ist wiedergegeben, daß mit den Halteelementen 29 des Einsatzes 18 auch an sich bekannte Trennwände 38 zusammenwirken können. Im dargestellten Ausführungsbeispiel der Fig. 4 ist jeder Gruppe der Halteelemente 29 eine Trennwand 38 zugeordnet; die Verbindung zwischen der Trennwand 38 und den Halteelementen 29 ist an sich bekannt. Es sei daher nur erwähnt, daß Teile des gabelförmigen Unterteils der Trennwand 38 unter die Schultern 31 der Köpfe 30 der Halteelemente 29 greifen. Andere Teile, und zwar Endbereiche der Trennwand stützen sich dagegen auf der Oberseite des Grundkörpers 19 des Einsatzes 18 ab.

In dem weiteren Ausführungsbeispiel nach der Fig. 5 der Zeichnung ist dem Einsatz 18 ein ebenfalls an sich bekannter Innenkanal 39 zugeordnet. Dieser Innenkanal 39 hat Haltearme, die einerseits mit der Schulter 31 des Kopfes 30 zusammenwirken und andererseits sich an dem Kopf 30 des Halteelementes 29 seitlich abstützen. In dem nicht näher bezeichneten Aufnahmeraum des Innenkanals 39 können in bekannter Weise ebenfalls elektrische Leitungen, Kabel od.dgl. untergebracht werden.

Gemäß dem Ausführungsbeispiel nach der Fig. 2 der Zeichnung ist ein und demselben Unterteil 11 eines Kabelkanals 10 eine größere Anzahl von Einsätzen 18 zugeordnet, die im dargestellten Ausführungsbeispiel sämtlich untereinander gleichgestaltet sind. Im Ausführungsbeispiel sind insgesamt drei Einsätze 18 in dem Innenraum des Unterteiles 11 des Kabelkanals 10 untergebracht. Die gegenseitige Lage der eingebrachten Einsätze 18 ist dabei vom Benutzer frei wählbar, es ist in der Fig. 2 auch offengelassen, ob die Teile des Einsatzes mit Kabelbindern, Trennwänden, Innenkanälen od.dgl. zusammenwirken. Selbstverständlich ist es nicht zwingend erforderlich, daß die Einsätze 18 in dem Unterteil 11 des Kabelkanals 10 nach der Fig. 2 der Zeichnung untereinander gleich gestaltet sind. Vielmehr ist es durchaus denkbar, daß ein und demselben Kabelkanal mehrere, unterschiedlich gestaltete Einsätze zugeordnet werden, die dann vom Benutzer wahlweise eingesetzt werden können.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich, dies gilt insbesondere für die Ausbildung und gestalt des Einsatzes 18. Der Einsatz kann selbstverständlich unterschiedlich viele Durchbrüche, Längs- und Querstege aufweisen. Das gleiche gilt für die Anzahl der Halteelemente, die ein und demselben Einsatz zugeordnet sind. Auch können die Verbindungselemente zwischen dem Einsatz und der Seitenwand 12 abweichend von dem dargestellten Ausführungsbeispiel gewählt werden. Wie eingangs bereits erwähnt, können die erfindungsgemäßen Einsätze auch bei anderen an sich bekannten Kabelkanälen Verwendung finden.
- 10: Kabelkanal
- 11: Unterteil (von 10)
- 12: Seitenwand (von 11)
- 13: Boden
- 14: Rasten (an 12)
- 15: Deckel (von 10)
- 16: Gegenrasten (zu 14)
- 17: Leisten (an 12 innen)
- 18: Einsatz
- 19: plattenförmiger Grundkörper (von 18)
- 20: Längssteg (von 19)
- 21: Längssteg (von 19)
- 22: Längssteg (von 19)
- 23: Quersteg (von 19)
- 24: Durchbruch (in 19)
- 25: Schräge (an 24)
- 26: Endteil = Schmalseite (von 19)
- 27: Rampe (schräge Innenwand von 26)
- 28: Gegenleiste (zu 17)
- 29: Halteelement
- 30: Kopf (von 29)
- 31: Schulter (von 29)
- 32: Verbindungssteg
- 33: Querverbinder
- 34: Auslaufspitze (von 26)
- 35: Unterseite (von 19)
- 36: Führungskanal (zu 35)
- 37: Kabelbinder
- 38: Trennwand
- 39: Innenkanal

## Patentansprüche

1. Kabelkanal, insbesondere Verdrahtungskanal, dessen Gehäuse aus einem Unterteil und einem damit lösbar verbindbaren Deckel besteht, wobei im Unterteil Halteelemente angeordnet sind, die zum Anbringen von elektrischen Installationsteilen, wie Kabelbindern, Kabelbinderhaltern od.dgl. bzw. von Trennwänden, Unterteilungen od.dgl. dienen,
**dadurch gekennzeichnet,**
daß die Halteelemente (29) einem Einsatz (18) zugeordnet sind, der seinerseits lösbar mit den Wänden, vorzugsweise den Seitenwänden (12) des Unterteiles (11), des Kabelkanals (10) verbindbar ist, und daß in Längsrichtung des Kabelkanals (10) eine Mehrzahl von Einsätzen (18) hintereinander angeordnet sind, wobei der gegenseitige Abstand benachbarter Einsätze (18) frei wählbar ist.

2. Kabelkanal nach Anspruch 1, dadurch gekennzeichnet, daß der Einsatz (18) Gegenleisten (28) aufweist, die mit Leisten (17) der Innenseiten der Seitenwände (12) des Unterteils (11) des Kabelkanals (10) zusammenwirken, derart, daß ein Einclipsen des Einsatzes (18) an einer frei wählbaren Stelle im Unterteil (11) des Kabelkanals (10) durchführbar ist.

3. Kabelkanal nach Anspruch 1 und 2, dadurch gekennzeichnet, daß die Gegenleisten (28) des Einsatzes (18) und die Leisten (17) der Seitenwände (12) des Kabelkanals (10) zusätzliche Rasten und Gegenrasten zur Verhinderung einer ungewollten Verschiebung des Einsatzes (18) in Kabelkanallängsrichtung aufweisen.

4. Kabelkanal nach einem oder mehreren der vorangehenden Ansprüche, dadurch gekennzeichnet, daß der Einsatz (18) einen plattenförmigen Grundkörper (19) aufweist, der auf seiner dem Deckel (15) des Kabelkanals (10) zugekehrten Oberseite eine Mehrzahl von Halteelementen (29) und an seiner Unterseite Führungskanäle (36) für Kabelbinder (37) aufweist, die über Durchbrüche (24) mit der Oberseite des Grundkörpers (19) in Verbindung stehen, und daß an den diametral gegenüberliegenden Endteilen (26) des Grundkörpers (19) des Einsatzes (18) die Gegenleisten (28) angeordnet sind.

5. Kabelkanal nach Anspruch 1 und 4, dadurch gekennzeichnet, daß der plattenförmige Grundkörper (19) des Einsatzes (18) eine Vielzahl von parallel und im Abstand voneinander verlaufenden Längsstegen (20,21,22) aufweist, die durch mehrere Querstege (23) bwz. Endteile (26) miteinander verbunden sind, und daß Bereiche der Oberseite der Stege der Anbringung der Halteelemente (29) dienen, während die Zwischenräume der Stege Durchbrüche (24) bilden, die in Führungskanäle (36) auf der Unterseite des Grundkörpers (19) einmünden.

6. Kabelkanal nach Anspruch 5, dadurch gekennzeichnet, daß wenigstens eine der Begrenzungswandungen der Durchbrüche (24) des Grundkörpers (19) zur Erleichterung des Einführens eines Kabelverbinders (37) od.dgl. eine Schräge (25) aufweist.

7. Kabelkanal nach Anspruch 5 und 6, dadurch gekennzeichnet, daß die Schrägen (25) derjenigen Durchbrüche (24) des Grundkörpers (19) des Einsatzes (18) die den Endteilen (26) benachbart sind, in Rampen (27) übergehen, an die sich eine Auslaufspitze (34) anschließt.

8. Kabelkanal nach den Ansprüchen 5 bis 7, dadurch gekennzeichnet, daß jedes Halteelement (29) in an sich bekannter Weise einen Kopf (30) aufweist, dessen Unterseite eine Schulter (31) zum Anbringen einer Trennwand (38), eines Innenkanales (39) od.dgl. hat, die in einen Verbindungssteg (32) übergeht, der seinerseits dem Grundkörper (19) des Einsatzes (18) angeformt ist.

9. Kabelkanal nach Anspruch 8, dadurch gekennzeichnet, daß auf den Querstegen (23) des Grundkörpers (19) des Einsatzes (18) mehrere Halteelemente (29) angeordnet sind, dessen Verbindungsstege (32) durch Querverbinder (33) miteinander in Verbindung stehen.
